# EUROPÄISCHE PATENTSCHRIFT

(11) **EP 2 745 028 B1**
(45) Veröffentlichungstag und Bekanntmachung des Hinweises auf die Patenterteilung: **16.09.2015**
(21) Anmeldenummer: 12740889.6
(22) Anmeldetag: 10.07.2012
(51) Int. Cl.: F03D 11/04, F16F 13/04, F16F 13/08, F16F 3/08, F16F 7/108

(54) **TEMPERATURUNABHÄNGIGER SCHWINGUNGSTILGER**
TEMPERATURE-INDEPENDENT VIBRATION DAMPER
ABSORBEUR DE VIBRATIONS INDÉPENDANT DE LA TEMPÉRATURE

(30) Priorität: 18.08.2011 EP 11006749
(43) Veröffentlichungstag der Anmeldung: 25.06.2014
(73) Patentinhaber: ESM Energie- und Schwingungstechnik Mitsch GmbH, 64668 Rimbach-Mitlechtern (DE)
(72) Erfinder: MITSCH, Franz, 64646 Heppenheim (DE); DÖRSAM, Mathias, 69488 Birkenau (DE)
(74) Vertreter: Benz, Jürgen
(86) Internationale Anmeldenummer: PCT/EP2012/002895
(87) Internationale Veröffentlichungsnummer: WO 2013/023724

(56) Entgegenhaltungen:
- EP-A1- 1 286 076
- EP-A1- 1 693 593
- WO-A1-90/07673

## Beschreibung

Die Erfindung betrifft ein auf elastischen Materialen basierendes Dämpfungselement, welches in Bezug auf eine vorab eingestellte Frequenz, bei denen das Bauteil dämpfen soll, aufgrund einfacher konstruktiver Maßnahmen weitgehend unabhängig ist von wechselnden Umgebungstemperaturen.
Die Erfindung betriff insbesondere entsprechende Schwingungstilger, die ein oder mehrere solche Dämpfungselemente aufweisen, sowie die Verwendung derartiger Dämpfungselemente und Tilger in maschinellen Anlagen, insbesondere Windkraftanlagen, welche naturgemäß großen Temperaturschwankungen unterliegen.

Die physikalischen Grundlagen eines Schwingungstilgers sind prinzipiell bekannt. Schwingungstilger müssen auf die Frequenz des zu tilgenden Bauteils abgestimmt werden. Die Abstimmung der Tilgerfrequenz kann einerseits durch die Änderung der Steifigkeit der eingesetzten Federelemente, andrerseits durch Änderung der Tilgermasse erreicht werden. Der Veränderung der Tilgermasse eines bestimmten zu dämpfenden Systems sind naturgemäß Grenzen auferlegt, und daher wird eine Tilgermassenänderung in der Praxis kaum angewendet. Somit bleibt die Variation in der Federsteifigkeit.

Bei Verwendung von elastischen Materialien bei modernen Tilgern ist diese aber prinzipiell von der Temperatur abhängig. Eine bei einer bestimmten Temperatur eingestellte und auf das zu dämpfende System abgestimmte Federsteifigkeit verändert sich mit den Umgebungstemperaturen. Während dieser Effekt bei zu dämpfenden Anlagen in Gebäuden oft vernachlässigt werden kann, so spielt er doch bei Outdoor-Anlagen, wie beispielsweise bei Windkraftanlagen, eine nicht unerhebliche Rolle. Windkraftanlagen sind je nach Standort meist großen Temperaturschwankungen zwischen -20° und +50°C ausgesetzt, bei denen sie noch betrieben werden. Dadurch verändert sich die Federsteifigkeit der eingesetzten Dämpfungsteile und somit die Erregerfrequenz des Systems, so dass keine oder keine optimale Dämpfung von Schwingungen, die in der Anlage auftreten, erfolgen kann, ohne dass eine Nachjustierung der Federsteifigkeit der Dämpfungsteile notwendig werden würde. Dies ist aber, falls überhaupt möglich aufwendig und damit kostenintensiv.

Es ist daher erstrebenswert Tilger einzusetzen, welche auf Temperaturänderungen nicht oder nur unwesentlich mit Veränderung der vorab eingestellten Tilgerfrequenz reagieren.

In der DE 2342370 wird eine hydrostatische Druckfeder beschrieben basierend auf einem eine Kammer ausfüllenden vorverdichteten Elastomer, welches eine zweite elastische Feder (Kammer) in Reihe vorgeschaltet ist, wobei das Volumen der zweiten elastischen Feder wesentlich kleiner ist als das Elastomer, welches die eigentliche Schubverformung erfährt. Beide elastomere Kammern stehen nicht in direkter Verbindung. Das Betriebsverhalten der gesamten Druckfeder ist durch diese Konstruktion bei unterschiedlichen Temperaturen weitgehend gleich.

In der EP 0562 161 wird Schwingungstilger beschrieben, umfassend eine an einem Federelement aus elastomerem Werkstoff beweglich angeordneten Tilgermasse, die phasenverschoben zu betriebsbedingt eingeleiteten Schwingungen in Bewegung versetzbar ist, wobei das Federelement an einem die Schwingungen erzeugenden Teil fetsgelegt ist. Dem Federlement ist zur Kompensation von Temperatureinflüssen eine Zusatzfeder in einer Parallelschaltung zugeordnet, deren Federsteifigkeit sich durch auf mechanischen Verschiebevorgängen beruhenden Hilfsmitteln veränderbar ist.

Die EP 2 284 416 löst das Problem der Temperaturänderung dadurch, dass das eigentliche elastische Dämpfungselement ein elektronisch kontrollierbarer Heizelement aufweist, welches gemäß den Umgebungstemperaturen gesteuert wird.

Die im Stand der Technik beschriebenen temperaturunabhängigen Tilgersysteme sind teilweise recht kompliziert, andrerseits arbeiten sie optimal nur in bestimmten limitierten Temperaturbereichen. Aufgrund der Dimensionen von Windkraftanlagen und den erheblichen Temperaturunterschieden während des Betriebes sind diese vorgeschlagenen Tilgersysteme nur bedingt geeignet.

Dazu zählen auch die Konzepte der Tilger, welche beispielsweise in der EP 1 286 076 A1 und der EP 1 693 593 B1 beschrieben sind. Die EP 1 286 076 offenbart einen linearen Schwingungstilger, dessen Feder-Masse-System sich aus den eigentlichen Funktionsteilen, in oder an denen sich Dämpfung vollzieht, und der Tilgermasse zusammen. Der Tilger wird, über das Funktionsteil vorab, meist vor oder unmittelbar nach Einbau in das zu dämpfende System, so eingestellt, dass die Tilgermasse gegenphasig nahe der Erregerfrequenz schwingt. Der Tilger ist somit fest auf eine bestimmte Erregerfrequenz abgestimmt. Diese Einstellung geschieht mittels Spannvorrichtungen über das Funktionsteil. Hierbei wird die Gummischicht innerhalb des Funktionsteils vorgespannt. Eine Verringerung der Gummivorspannkraft bewirkt eine Reduzierung der Tilgerfrequenz; eine Erhöhung der Gummivorspannung innerhalb des Funktionsteils führt zu einer höheren Tilgerfrequenz. Die Funktionsteile weisen konusförmige oder spärische Flachen auf, die mit Elastomermaterial versehen sind und einen bestimmten Winkel mit der Längsachse des Tilgers bilden. Die EP 1 693 593 beschreibt einen einstellbaren Drei-Achsen-Tilger, der auf dem gleichen Prinzip beruht, jedoch einen Vielzahl von entsprechend geformten und angeordneten derartiger Funktionsteilen umfasst.

Diese Gummivorspannung in den beschrieben und in anderen Tilgern des Standes der Technik ist allerdings abhängig von der Gummitemperatur und / oder der Umgebungstemperatur. Somit verändert sich die Tilgerfrequenz bei Temperaturschwankungen. Dies führt dazu dass ein Tilger nur optimal bei der Temperatur wirken kann, bei der er auch eingestellt wurde. Abweichungen von 10°C können hierbei, schon zu einem kompletten Funktionsausfall des Tilgers führen. Dieses Phänomen ist abhängig von dem verwendeten Gummi aber unabhängig hiervon immer vorhanden. Die Verwendung von Tilgern nach obigem Funktionsprinzip setzt somit gleichbleibende Umgebungstemperaturen voraus. Genau diese Tatsache ist allerdings bei den meisten Anwendungsfällen nicht gegeben. Bei den meisten Außenanwendungen muss ein Tilger in einem großen Temperaturbereich (ca. -20°C bis +50°C) wirken. Dies ist mit dem momentanen Stand der Technik nicht möglich. Aus diesem Grund, macht es Sinn, einen Tilger zu entwickeln, der seine eingestellte Eigenfrequenz über ein breites Temperaturspektrum konstant hält.

Es bestand somit die Aufgabe ein einfaches und effektives, über einen großen Temperaturbereich arbeitendes Dämpfungssystem insbesondere für den Einsatz in Windkraftanlage zur Verfügung zu stellen.

Die Aufgabe wurde durch die Schwingungstilger, bzw. der entsprechenden erfindungsgemäßen Dämpfungselemente, wie sie im Folgenden und in den Ansprüchen näher beschrieben sind, gelöst.

Die neuen erfindungsgemäßen Tilger / Dämpfungselemente beruhen auf folgenden physikalischen Gegebenheiten: (i) Schrumpfen von Elastomervolumen bewirkt eine sinkende Eigenfrequenz, da sich hierdurch die Vorspannung [mm] der gegenseitig verspannten Funktionsteile (1 + 2) zueinander verringert, (ii) Verhärtung der Gummischichten (1.2 + 2.1) lässt hingegen die Eigenfrequenz des Tilgers ansteigen, da sich die Federsteifigkeiten [N/mm] der beiden Gummischichten (1.2 + 2.1) erhöht.

Durch Temperaturschwankungen werden die Gummischichten (1.2 + 2.1) innerhalb der erfindungsgemäßen Funktionsteile (1 + 2) zwei unterschiedlichen Effekten unterworfen. Zum einen verhärten sich mit sinkender Temperatur die Gummischichten (1.2 + 2.1) zum anderen schrumpft das Gummivolumen innerhalb der Gummischichten (1.2 + 2.1). Mit steigender Temperatur ist der gegenteilige Effekt zu beobachten.

In der Praxis ist ein Anstieg der (vorab eingestellten) Tilgerfrequenz bei sinkender Temperatur zu beobachten, und eine Abnahme bei steigenden Temperaturen. Der Effekt der Verhärtung bei sinkenden Temperaturen ist somit dominant.

Die erfindungsgemäßen Dämpfungselemente und Tilger weisen nun konstruktive Merkmale auf, die bewirken, dass das bei Temperaturabnahme das Schrumpfen das Elastomermaterials der funktionellen Teile mehr zunimmt als die gleichzeitig stattfindende Verhärtung, bzw. bei Temperaturzunahme der Schrumpfungsprozess stärker rückgängig gemacht wird als die Verhärtung des Elastomermaterials. Damit ist es auf einfache Weise möglich, die beiden Effekte gegenseitig vollständig oder annähernd zu kompensieren.

Möglich wird dies durch zusätzliche Elastomervolumina, die mit den elastischen Materialen der eigentlichen Funktionsteile, welche für die Schubverformung bei betriebsbedingten Schwingungskräften verantwortlich sind, in direkter Verbindung stehen, und vorzugsweise aber nicht notwendigerweise selbst nicht an der Schubverformung teilnehmen. Überraschend wurde gefunden, das der oben beschriebene Kompensationseffekt besonders optimal und in einem besonders großen Temperaturbereich (-20° bis +50°C, vorzugsweise -15°C bis + 40°C) anwendbar ist, wenn das Volumen des besagten zusätzlichen Elastomervolumens (1.1) 5 bis 100, vorzugsweise 5 bis 50, insbesondere 10 bis 20, mal größer ist als das Elastomervolumen (1.2/2.1) des für die Schubverformung / Dämpfung verantwortlichen Funktionsteils(1), bzw. (2).

Gegenstand der Erfindung ist somit ein Dämpfungselement (1) (2) geeignet zur temperaturunabhängigen Reduzierung von Schwingungen im Wesentlichen umfassend ein festes nicht elastisches Außenteil (1.4) (2.3) und ein festes, nicht elastisches Innenteil (1.3) (2.2), welches ganz oder teilweise passend in eine entsprechend geformte Aussparung oder Öffnung des Außenteils eingefügt ist, wobei Außen- und Innenteil Berührungsflächen aufweisen, welche durch eine aus einem Elastomermaterial bestehende elastische Schicht (1.2) (2.1) mit einander verbunden sind, die durch Spannmittel in Bezug auf eine gewünschte Erregerfrequenz vorgespannt oder vorspannbar ist, wobei die für die Schwingungsdämpfung verantwortliche elastische Schicht (1.2) direkt mit einem zusätzlichen elastischen Volumen (1.1) (13) an einer oder mehreren Stellen in Verbindung steht, wobei das besagte zusätzliche elastische Volumen das 5- bis 100- fache, vorzugsweise 5- bis 50-fache, insbesondere das 10- bis 20-fache des Volumens der elastischen Schicht (1.2) beträgt, und bewirkt, dass bei Temperaturänderung die eingestellte Erregerfrequenz des Dämpfungselementes weitgehend konstant bleibt.

Unter dem Begriff "weitgehend konstant" ist erfindungsgemäß zu verstehen, wenn sich die Erregerfrequenz bei Temperaturänderung im Bereich zwischen - 20°C und +50° C, vorzugsweise zwischen - 10°C und + 30°C, nicht mehr als 0%, 5%, 10%, 15% oder 20%, maximal 10 - 20%, vorzugsweise nicht mehr als 0 - 10%, insbesondere nicht mehr als 0 - 5% gegenüber der vorab bei einer bestimmten Temperatur eingestellten Frequenz ändert.

Das zusätzliche Gummi-/Elastomervolumen (1.1) steht mit der Gummischicht (1.2) in direktem Kontakt. Wird das Funktionsteil (1) nun abgekühlt, so zieht sich ein größeres Gummivolumen als bisher zusammen. Der oben beschriebene Effekt der sinkenden Eigenfrequenz des Tilgers durch Schrumpfen des Gummivolumens wird somit verstärkt. Dieser nun größere Gummischrumpf hat eine kleinere Vorspannkraft, der zueinander verspannten Funktionsteile (1.2 + 2.1) zur Folge. Je größer das zusätzliche Gummivolumen (1.1) gewählt wird, desto größer fällt die Reduzierung der Tilgerfrequenz durch diesen Effekt aus. Je nach Systemeigenschaften hat sich erfindungsgemäß ein 5-100-faches, vorzugsweise 10 - 20-faches zusätzliches Elastomervolumen (1.1) gegenüber den Elastomerschichten (1.2) (2.1), als optimal erwiesen.

Bei der genauen Bestimmung der Größe des Elastomervolumens sind folgende Parameter zu berücksichtigen:
(i) Wärmeausdehnungskoeffizient des Elastomermaterials im Funktionsteil (1.2) (2.1). Je größer dieser ist, desto mehr zusätzliches Elastomervolumen (1.1) wird benötigt. Vorzugsweise ist der Wärmeausdehnungskoeffizient des Materials des Funktionsteils gleich oder kleiner als derjenige des zusätzlichen Elastomervolumens. In diesem Fall ist es ausreichend, dass das Volumen des zusätzlichen Elastomermaterials (1.1) etwa 5 - 20, vorzugsweise etwa 10 mal größer ist als dasjenige des Funktionsteils.
(ii) Wärmeausdehnungskoeffizient des Elastomermaterials im zusätzlichen Elastomervolumen (1.1). Je größer dieser ist, desto weniger zusätzliches Volumen (1.1) wird benötigt. Vorzugsweise ist der Wärmeausdehnungskoeffizient des Materials des zusätzlichen Elastomervolumens gleich oder größer als derjenige des Funktionsteils. In diesem Fall ist es ausreichend, dass das Volumen des zusätzlichen Elastomermaterials (1.1) etwa 5 - 20, vorzugsweise etwa 10 mal größer ist als dasjenige des Funktionsteils (1), (2).
(iii) Volumen der Elastomerschicht (1.2) (2.1) des Funktionsteils (1) (2). Je größer diese Schicht, desto größer muss das zusätzliche Elastomervolumen (1.1) sein. Das Voulmen wird auch von der Schichtdicke bestimmt.
(iv) Schichtdicke des Elstomers des Funktionsteils. In der Regel sind die Schichten (1.2) (2.1) für in Windkraftanlagen eingesetzten erfindungsgemäßen Dämpfungselementen zwischen 2mm und 20mm dick. Bei Schichtdicken zwischen 2-10mm soll erfindungsgemäß das zusätzliche Elastomervolumen (1.1) optimaler Weise etwa 10 mal so groß sein wie das das Volumen der Schichtdicke des Funktionsteils. Wird eine dicke Gummischicht realisiert, wird der Effekt der Vorspannkraftveränderung durch Gummischrumpf geringer ausfallen, als wenn diese dünn ist (bei gleichem Elastomervolumen (1.1)). Dies kann dadurch erklärt werden, dass sich die stirnseitige Gummikontur, durch Volumenänderung des Gummis, bei einer dicken Schicht, einschnürt oder nach außen wölbt. Hierdurch fällt die Änderung der Vorspannkraft und somit eine Änderung des Vorspannweges eher gering aus. Bei einer dünnen Gummischicht hingegen, fällt dieser Effekt, wie gewünscht, größer aus. Allgemein kann gesagt werden, dass eine dickere Gummischicht bei gleichem Verformungsweg eine höhere Lebensdauer aufweist. Wird nun diese Gummischicht zu dünn gewählt, so kann dies zu vorzeitigem Ausfall des Tilgers führen.
(v) Material der Elastomerschichten (2.1 /1.2): werden diese Schichten, beispielsweise mit Silikon ausgeführt, so ist der Einfluss der Temperatur auf die Tilgerfrequenz weniger groß. Hierdurch kann das zusätzliche Elastomervolumen (1.1) kleiner ausfallen.
(vi) Temperaturbereich bzw. Temperaturunterschied in/bei dem der erfindungsgemäße Tilger arbeiten soll. Je größer der gewünschte Temperaturbereich sein soll, umso größer muss das zusätzliche Elastomervolumen (1.1) sein. Das etwa 10-fache des Elastomervolumens (1.1) gegenüber dem Elstomervolumen des Funktionsteils (1.2) (2.1) ist für sich genommen optimal in einem Temperaturbereich von -10°C und +30°C. Bei höheren Arbeitstemperaturen bis +40°C ist das 10 bis 20-fache Volumen (1.1) vorzusehen, bei noch höheren Temperaturen das 20 bis 100-fache.

Das zusätzliche Gummivolumen (1.1) muss so angepasst werden, dass es den Effekt der Gummiverhärtung bei sinkender Temperatur genau kompensiert. Da sich die Veränderung des Gummivolumens und die Gummiverhärtung annähernd linear im Temperaturbereich (-10°C bis +60°C) verhalten, ist eine gegenseitige Kompensation in diesem Temperaturbereich möglich. Letztendlich muss die Federsteifigkeit der beiden Funktionsteile (1.2 + 2.1) im gemeinsamen Verspannpunkt, unabhängig von der Temperatur, konstant sein. Ist dies der Fall, wird die eingestellte Tilgerfrequenz auch konstant sein.

Im Gegensatz zu den oben beschriebenen temperaturunabhängigen Tilgern des Standes der Technik werden bei den erfindungsgemäßen Tilgern / Dämpfungselementen alle dynamischen Bewegungen, welche bei der Schubverformung während der Dämpfung auftreten durch das Elastomermaterial insbesondere im zusätzlichen Elastomervolumen (1.1) aufgenommen.

Erfindungsgemäß umfasst ein Dämpfungselement (1) (2) ein nicht elastisches Außenteil, zumeist aus Metall (1.4) (2.3) ein ebenfalls nicht elastisches Innenteil (1.3) (2.2) und eine elastische Schicht (1.2) (2.1) welche Außen- und Innenteil voneinander trennen. Diese elastische Schicht zwischen der Berührungsfläche von Außenteil und Innenteil besteht vorzugsweise aus Gummi/Kautschuk, synthetischem Kunststoff wie PU oder Silikon oder elastischen Gemischen davon. Die gewählte Shore-Härte des Materials bestimmt sich nach der Größe und den konstruktiven Eigenschaften des Tilgers. Dementsprechend bestimmt sich auch die Dicke der Schicht. In der Regel beträgt sie 5 - 20 mm. Vorzugsweise besitzt der Kern und ebenso die passende Aussparung in Außenteil eine konische Form mit einem Winkel von vorzugsweise 30 - 50° gemessen zur Längsachse des Funktionsteils. Andere konstruktive Lösungen, welche eine entsprechende elastische Schicht zur Aufnahme der Schubverformung unter Betriebsbedingungen des Tilgers aufweisen, sind jedoch denkbar und Gegenstand der Erfindung. Erfindungsgemäß steht die elastomere Schicht (1.2) (2.1) in direkter Verbindung mit dem zusätzlichen Elastomervolumen (1.1), das innerhalb des Funktionsteils, beispielsweise im Außenteil (1.4) oder Innenteil (1.3) angeordnet ist, oder aber in einer speziellen Ausführungsform außerhalb des Tilgers selbst platziert sein kann. In den Funktionsteilen (1) und (2) eines erfindungsgemäßen Dämpfingselementes liegen die Schichten (1.2) und (2.1) vorzugsweise in konisch planarer oder konkav/konvex bzw. sphärischer Form vor; sie könne aber auch zylindrisch-plan ausgebildet sein.

Vorzugsweise weist ein erfindungsgemäßer Tilger zwei gleiche oder ähnliche Dämpfungselemente oder Funktionsteile (1) (2) auf, wobei das zusätzliche Elastomervolumen nur in einem Funktionsteil oder in beiden Funktionsteilen oder ggf. außerhalb des Funktionsteils, bzw. sogar außerhalb des Tilgers platziert ist.

Die Dämpfungselemente oder Funktionsteile (1)(2) werden gegeneinander durch entsprechende Spannmittel (7) verspannt, wobei sie vorzugsweise ein jeweils konisch planes Außenteil (1) und ein konisch planes Innenteil (2) aufweisen, wobei beide Elemente mit der weiten Konusöffnung (O-Form) oder mit der engen Konusöffnung (X-Form) gegeneinander verspannt sein können. Die Elemente (1) und (2) können aber auch konkav/konvex gestaltet sein, so dass bei Aneinanderfügen der Teile eine sphärische Form der Schichten ausgebildet wird. Die Verspannung der Elemente (1) und (2) geschieht jeweils bei einer bestimmten Temperatur. Hierdurch wir eine bestimmte Eigenfrequenz des Tilgers eingestellt. Dünne Gummischichten in den Funktionsteilen (1.2 + 2.1) führen dazu, dass bereits kleine Drehwinkel der Spannmittel, vorzugsweise Einstellschrauben (7) eine große Änderung der verspannten Federsteifigkeit und somit eine große Änderung der Tilgerfrequenz zur Folge haben. Dies wiederum kann dazu führen, dass sich der Tilger nur schwer über die Spannmittel (7) einstellen lässt. Daher sind die Spannmittel (7) in der Regel nur für eine Grobeinstellung der Tilgerferquenz vorgesehen. Die oft notwendige Feineinstellung kann über separate Spannmittel (8) erfolgen, welche vorzugsweise direkt Einfluss auf das zusätzliche Elastomervolumen nehmen können. Diese verdrängen Gummi im zusätzlichen Elastomervolumen (1.1) und verändern somit die Federsteifigkeit der Funktionsteile.

Diese Spannmittel (8) haben zudem eine weitere Aufgabe. Wird das zusätzliche Elastomervolumen (1.1) vulkanisiert oder auch aus einem gießbarem Polyurethan hergestellt, so zieht sich dieses Material beim Abkühlen zusammen, und es verringert sich somit sein Volumen. Dadurch eventuell auftretende Hohlräume, werden durch das Eindrehen der Spannmittel (8) durch verdrängtes Elastomer ausgefüllt, was wichtig für eine eingestellte konstante Eigenfrequenz des Tilgers ist.

Die für die Feinjustierung vorgesehenen Spannmittel (8) können im einfachsten Fall Einstellschrauben sein. Alternativ können auch aktive Stellglieder, wie zum Beispiel, Piezo-Aktoren, Magnete oder auch pneumatische/ hydraulische Zylinder eingesetzt werden. Diese Stellglieder könnten im Betrieb angesteuert werden und somit die Eigenfrequenz des Tilgers nach oben oder nach unten verschieben (aktiver Tilger). Ist eine geringere Eigenfrequenz gewünscht, so wird man die Stellglieder so ansteuern, dass diese weiniger Gummivolumen im zusätzlichen Elastomervolumen (1.1) verdrängen. Bei steigender Tilgerfrequenz werden die aktiven Stellglieder mehr Volumen im zusätzlichen Elastomervolumen (1.1) verdrängen.

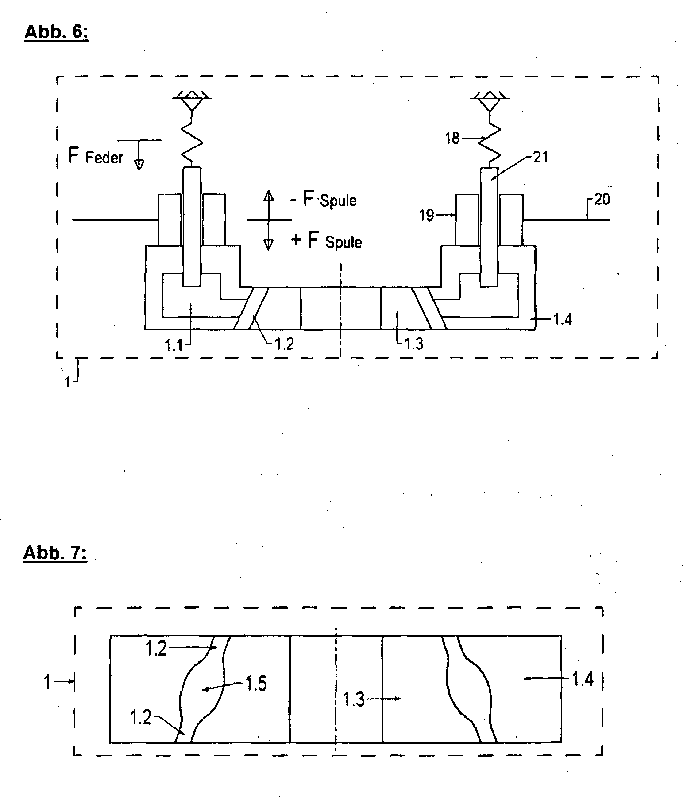

In einer besonderen Ausführungsform, ist es auch möglich, eine elektrische Magnetspule (19) mit einer Feder (18) in Reihe zu schalten und diese Einheit als aktives Stellglied zu benutzen. Hierdurch können drei Stellungen des Metallbolzens (21) erzielt werden. Jede einzelne Stellung entspricht hierbei einer anderen Verdrängung von Elastomer innerhalb dem zusätzlichen Elastomervolumen (1.1) und somit einer anderen Eigenfrequenz des Tilgers (Abb. 6):
Stellung 1:→ Lediglich Federkraft ohne zusätzliche Spulenkraft (Spule ohne Strom)
Stellung 2:→Federkraft + zusätzliche Spulenkraft
Stellung 3:→Federkraft - zusätzliche Spulenkraft (Umpolung der Stromrichtung)

Da mehrere dieser aktiven Stellglieder verbaut werden können, sind unterschiedliche Stellungen der aktiven Stellglieder untereinander möglich. Hierdurch kann das verdrängte Elastomervolumen in kleinen Schritten verändert werden. Je mehr aktive Stellglieder verbaut werden, desto kleiner sind diese Schritte und somit die Änderungsprünge der Tilgerfrequenz.

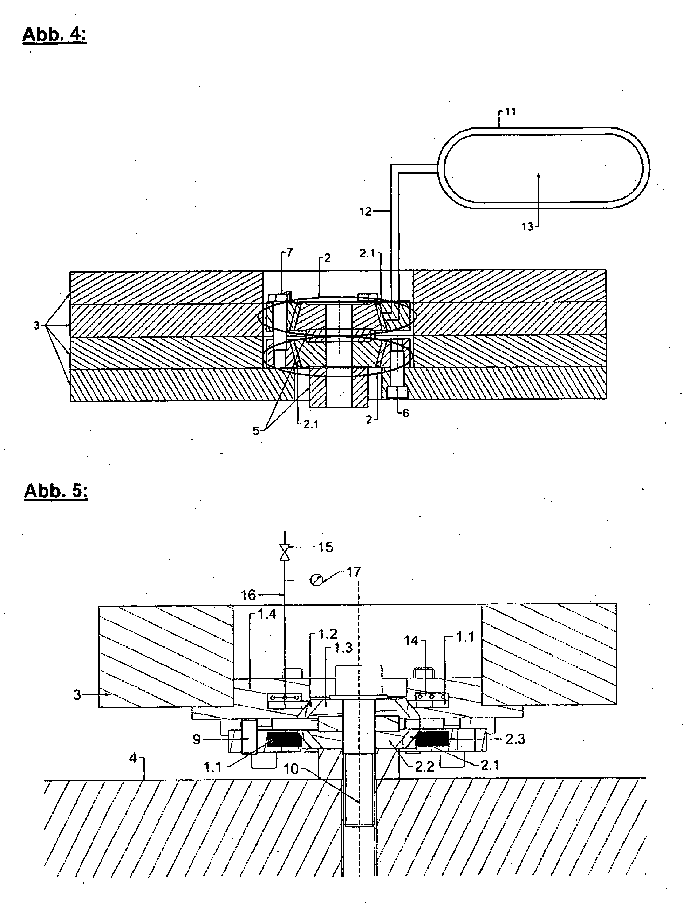

In einer weiteren Ausführungsform der Erfindung kann das Spannmittel (8), mit welchem das zusätzliche Elastomervolumen verändert werden und somit Einfluss auf die Tilgerfrequenz Einfluss genommen werden kann, auch ein regelbares Druckteil (14) sein, das im zusätzlichen Elastomervolumen (1.1) selbst untergebracht ist, oder mit diesem in unmittelbarem Kontakt steht. Das regelbare Druckteil hat die Aufgabe Druck auf das Elastomermaterial des zusätzlichen Elastomervolumens auszuüben und dieses somit gezielt zu komprimieren oder zu dekomprimieren. Beispielsweise kann das Druckteil selbst ein Elastomerteil sein mit gleicher oder unterschiedlicher Härte, welches in seinem Inneren Hohlräume oder Leitungen aufweist, die mit einer hydraulischen Flüssigkeit oder einem Gas über Zuleitungen beschickt werden können und so zu einer Aufweitung oder Verengung der Hohlräume oder Leitungen führen (Abb. 5). Das Druckteil, vorzugsweise ein Druckring (14), vergrößert sein Volumen mit steigendem Fülldruck. Hierdurch wird zusätzliches Elastomer aus dem Elastomervolumen (1.1) verdrängt, was wiederum die Tilgerfrequenz ansteigen lässt. Wird hingegen der Druck im Druckring (14) verringert werden, sinkt die Tilgerfrequenz.

Es ist nicht zwingend notwendig, dass das elastische Material innerhalb vom Funktionsteil (1) (2) das Gleiche sein muss wie im zusätzlichen Reservoir (1.4). Vorzugsweise wird das Funktionsteil mit Gummi oder Silikon vulkanisiert. Das zusätzliche Reservoir (1.1), beispielsweise im Außenteil (1.4) kann getrennt hiervon aus einem anderen elastischen Material mit vorzugsweise einem anderen Elastizitätskoeffizienten hergestellt werden. Vorzugsweise sollte das hierfür verwendete Material einen großen Temperaturausdehnungskoeffizienten besitzen. Hierdurch reduziert sich die erforderliche Reservoir-Größe im Außenteil (1.4). Durch diese voneinander getrennte Ausführungsform wird zudem die Herstellbarkeit erleichtert.

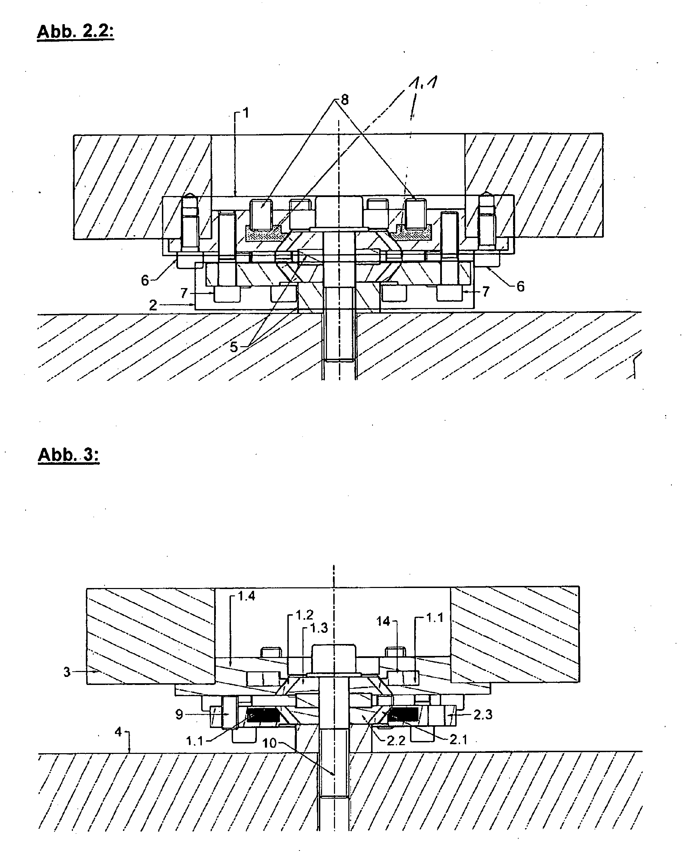

Wie bereits erwähnt kann das zusätzliche Elastomervolumen (1.1) lediglich in einem Funktionsteil oder in beiden zueinander verspannten Funktionsteilen untergebracht sein (Abbildung 3). Hierdurch verringert sich die Baugröße, da sich das zusätzliche Elastomervolumen (1.1) auf mehrere Funktionsteile aufteilt.

Zudem ist es, wie bereits beschrieben, möglich, das zusätzliche Elastomervolumen (1.1) außerhalb des Funktionsteils (1) und nicht im Bauteil (1.4) selbst unterzubringen (Abbildung 4). Diese getrennte Anordnung hat den Vorteil, dass das zusätzliche Reservoir (11) irgendwo platziert werden kann und somit in seinem Volumen nicht begrenzt ist. Die Verbindung zwischen diesem zusätzlichem Volumen (13) und der Gummischicht (2.1) innerhalb des Funktionsteiles muss hierbei durch eine Zuleitung (12) erfolgen, welche sich unter Druckveränderung nur geringfügig verformt. Dies gilt in gleichem Maße für den Behälter (11), welcher das zusätzliche Volumen (13) aufnimmt. Das Volumen (13) ist vorzugsweise mit einem Elastomer ganz oder teilweise ausgefüllt. Das Volumen (13) kann jedoch erfindungsgemäß auch eine Flüssigkeit aufweisen, die so gewählt wurde, dass sich bei Temperaturänderung eine Änderung des Aggregatzustandes (z.B. flüssig in fest) bzw. der Viskosität einstellt. Hierdurch verändert sich das funktionelle Volumen, was eine direkte Auswirkung auf die Tilgerfrequenz hat.

Möglich ist zudem, die Gummischicht (1.2) im Funktionsteil (2) aus einem elastischen Material herzustellen, den separaten Druckbehälter (11) hingegen alternativ nicht mit Elastomer sondern mit einem Gas oder einer Flüssigkeit zu füllen. Dies hat den Vorteil, dass innerhalb der Zuleitung (12) geringere Reibwerte auftreten.

In einer weiteren Ausführungsform kann der Behälter (11) gezielt beheizt oder gekühlt werden. Hierdurch kann ebenfalls aktiv auf die Eigenfrequenz des Tilgers Einfluss genommen werden. Dieses Heizen oder Abkühlen kann auch direkt über Heizdrähte / Kühlkanäle innerhalb des zusätzlichen Elastomervolumen (1.1) erfolgen.

In einer besonderen Ausführungsform der Erfindung ist das zusätzliche Elastomervolumen (1.1) in die eigentlichen Gummischicht (1.2) integriert (Abb. 7). In diesem Fall ist das zusätzliche Elastomervolumen an der Schubverformung des im Betrieb befindlichen Tilgers zumindest teilweise beteiligt. Dieses zusätzliche Elastomervolumen innerhalb der Gummischicht (1.5) übernimmt die gleiche Aufgabe wie das separate zusätzliche Elastomervolumen (1.1). Durch diese Ausführungsform lässt sich der konstruktive Aufwand für das Funktionsteil (1) reduzieren.

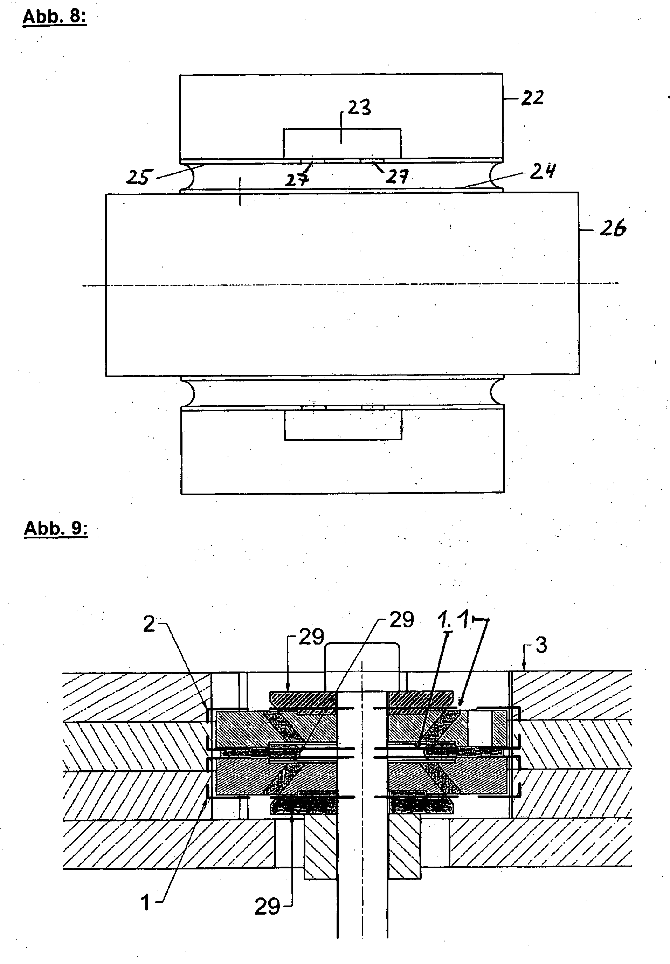

Diese Konstruktion kann auch auf Getriebe-Buchsen übertragen werden (Abb. 8). Diese bestehen auch aus Gummi und verändern somit in gleichem Maße ihre Federsteifigkeit über der Temperatur. Auch dieses Verhalten ist unerwünscht. Diese Veränderung der Federsteifigkeit über der Temperatur kann nach gleichem Funktionsprinzip, wie oben beschrieben, minimiert werden. Hierbei entsteht das zusätzliche Elastomervolumen (23) über einen Einstich im Gehäuse (22), welcher mit Gummi oder einem elastischen Alternativmaterial (Silikon, Polyurethan, etc.) gefüllt wird. Dieses zusätzlich entstandene Elastomervolumen (23) ist über Verbindungslöcher im Außenblech der Buchse (27) mit der eigentlichen Elastomerschicht der Buchse (28) verbunden. Verringert sich nun die Temperatur, so wird die Elastomerschicht der Buchse (28) steifer. Dem entgegenwirkend zieht es sich das nun größere Gummivolumen verstärkt zusammen, dies wirkt der Verhärtung entgegen.

In einer weitergestalteten Ausführungsform der beschriebenen Tilger gemäß der Erfindung, kann wie folgt, auf den Frequenz-Einstellbereich des Tilgers Einfluss genommen werden: Wie bereits beschrieben, zieht sich das Elastomervolumen (1.1 + 1.2 + 2.1) bei Temperaturabfall zusammen. Hierdurch verringert sich die Vorspannung der gegeneinander verspannten Funktionsteile (1+2). Dies führt zu einer Verringerung der Tilgerfrequenz. Gleichzeit tritt eine dynamische Verhärtung der Gummischicht (1.2 + 2.1) ein. Dieser Effekt führt zu einem Anstieg der Tilgerfrequenz. Das zusätzliche Elastomervolumen (1.1) muss demnach so ausgelegt sein, dass sich beide Effekte kompensieren. Werden nun Funktionsteile (1) (2) verbaut, welche eine stark progressive Kennlinie besitzen, so führen geringe Vorspannungsänderungen zu einer großen Veränderung der Tilgerfrequenz. Das zusätzliche Elastomervolumen (1.1), kann somit kleiner ausfallen, als bei weniger stark progressiven Funktionsteile (1)(2). Die Progressivität (starke Veränderung auf die Schwingungs-/ Dämpfungs-Eigenschaften) der Funktionsteile (1+2) kann zum einem, wie oben beschrieben, über die Geometrie der Gummischicht (1.2 + 2.1) zum andern erfindungsgemäß über zusätzliche Scheiben (29) realisiert werden, welche sich an die betreffende Gummischicht anlegen können. Die Scheiben (29) bestehen erfindungsgemäß aus vorzugsweise nicht elastischen Material und besitzen vorzugsweise zumindest an den Kanten Fasen welche mit den elastischen Schichten (1.2) bzw. (2.1) direkt oder über das zusätzliche Elastomervolumen (1.1) bzw. über das zusätzliche Volumen (13) in Verbindung stehen. Wird nun die axiale Vorspannung verändert, so legen sich die Fasen der Scheiben (29) immer stärker an den Gummischichten (1.2 + 2.1) oder ggf. auch an dem zusätzliche Elastomervolumen (1.1) bzw. (13) an, bzw. das durch die Fasen zusätzlich gebildet Volumen wird zunehmend durch das elastische Material aus (1.2), (2.1), (1.1) oder (13) ausgefüllt. Damit kann das verdrängte Gummivolumen nicht ungehindert aus der Gummischicht (1.2) (2.1) oder ggf. (1.1) bzw. (13) entweichen. Dieser Effekt lässt die Progressivität der Funktionsteile (1) (2) stark ansteigen. Dieser Effekt kann dazu genutzt werden, den Frequenzbereich des Tilgers nach oben hin zu vergrößern, wobei die Tilgerferquenz stärker ansteigt, als wenn keine Scheiben (29) vorhanden wären. Die Scheiben (29) vergrößern also den Frequenzbereich des Tilgers zu höheren Werten und zwar auch unabhängig davon, ob der Tilger temperaturkompensiert ist oder ob es sich um einen temperaturabhängigen Tilger handelt. Es ist jedoch nicht zwingend notwendig, dass die Scheiben (29) Fasen besitzen. In diesem Fall, legt sich das verdrängte Elastomervolumen an die Scheiben (29) ohne Fasen an, oder das verdrängte Elastomervolumen aus dem Funktionsteil (1) legt sich an das verdrängte Elastomervolumen aus dem Funktionsteil (2) an. Erfindungsgemäß umfasst der erfindungsgemäße Tilger mindestens eine Scheibe (29), welche oberhalb oder unterhalb des Funktionsteils (1) oder (2) angebracht ist, und wie beschrieben, mit diesem in funktioneller Verbindung steht. Vorzugsweise umfasst ein erfindungsgemäßer Tilger zwei oder drei Scheiben (29), welche oberhalb und / oder unterhalb und / oder zwischen den Funktionsteilen (1) und (2) angebracht sind, und mit den elastischen Schichten oder Volumina (1.2) (2.1) (1.1) (13) in Verbindung stehen oder in Verbindung stehen können, entsprechend der jeweiligen Ausführungsform der Erfindung.

Zusammengefasst betrifft die Erfindung folgendes:
- Ein Dämpfungselement (1) geeignet zur temperaturunabhängigen Reduzierung von Schwingungen im Wesentlichen umfassend ein festes nicht elastisches Außenteil (1.4) und ein festes, nicht elastisches Innenteil (1.3), welches ganz oder teilweise passend in eine entsprechend geformte Aussparung oder Öffnung des Außenteils eingefügt ist, wobei Außen- und Innenteil Berührungsflächen aufweisen, welche durch eine aus einem Elastomermaterial bestehende elastische Schicht (1.2) mit einander verbunden sind, die durch Spannmittel in Bezug auf eine gewünschte Frequenz vorgespannt oder vorspannbar ist, wobei die für die Schwingungsdämpfung verantwortliche elastische Schicht (1.2) mit einem zusätzlichen elastischen Volumen (1.1) direkt an einer oder mehreren Stellen in Verbindung steht, wobei das zusätzliche elastische Volumen (1.1) das 5- bis 100- fache, vorzugsweise das 5- bis 25- fache, insbesondere das 10 - 20-fache des Volumens der elastischen Schicht (1.2) beträgt, und bewirkt, dass bei Temperaturänderung die Frequenz des Dämpfungselementes weitgehend konstant bleibt, wobei bei einer Temperaturänderung in einem Bereich zwischen - 30°C und +50°C eine Änderung der eingestellten Erregerfrequenz von max. 10 - 20%, vorzugsweise max. 0 - 10% eintritt.
- Ein entsprechendes Dämpfungselement (1) (2), bei dem das zusätzliche elastische Volumen (1.1) im Außenteil (1.4) (2.3), und / oder im Innenteil (1.3) (2.2), und / oder außerhalb des Dämpfungselementes bzw. Tilgers untergebracht ist.
- Ein entsprechendes Dämpfungselement, bei dem das zusätzliche elastische Volumen (1.1) (13) ein Teil des Volumens der elastischen Schicht (1.2) ist und gebildet wird durch Aussparungen oder Kavitäten in den Berührungsflächen des Außen- und Innenteils (1.1)(1.3) des Dämpfungselementes.
- Ein entsprechendes Dämpfungselement, bei dem das zusätzliche elastische Volumen (1.1) (13) einen temperaturabhängigen Ausdehnungskoeffizienten besitzt der größer ist als der Ausdehnungskoeffizient der elastomeren Schicht (1.2).
- Ein entsprechendes Dämpfungselement, bei dem das zusätzliche elastische Volumen (1.1) durch Druckmittel zusätzlich komprimiert oder dekomprimiert werden kann, wobei das Druckmittel eine oder mehrere Spannschrauben (8), oder einen beispielsweise durch eine elektrische Magnetspule betriebenen Metallbolzen umfasst (18 - 21), oder ein aktiv veränderbares Elastomerelement (14) umfasst.
- Ein entsprechendes Dämpfungselement, bei dem das zusätzliche elastische Volumen ein Elastomermaterial, ein Gas, eine Flüssigkeit oder ein viskoses Material ist, wobei eine Flüssigkeit eingeschlossen ist, welche bei Temperaturänderung in einen anderen Aggregatszustand übergeht (flüssig-fest, fest-flüssig)
- Ein temperaturunabhängiger Schwingungstilger umfassend eine Tilgermasse (1) und mindestens ein Dämpfungselement wie oben beschrieben.
- Ein entsprechender temperaturunabhängiger Schwingungstilger, welcher zwei Dämpfungselemente, wie beschrieben aufweist, wobei beide Dämpfungselemente gegeneinander durch Spannmittel (7) verspannt oder verspannbar sind.
- Ein entsprechender temperaturunabhängiger Schwingungstilger, welcher ein erstes und eine zweites Dämpfungselemente, wie beschrieben aufweist, wobei das zweite Dämpfungselement kein zusätzliches elastisches Volumen (1.1) im Außen- und / oder Innenteil (2.3) (2.2) aufweist, und beide Dämpfungselemente gegeneinander durch Spannmittel (7) verspannt oder verspannbar sind.
- Ein entsprechender temperaturunabhängiger Schwingungstilger bei dem das zusätzliches Volumen (1.1) (13) der Dämpfungselemente (1) und (2) zusammen 5 - 50 mal, vorzugsweise 10 - 20 mal größer ist als das Volumen der Elastomerschichten (1.2) und (2.1) zusammen.
- Die Verwendung eines entsprechenden Schwingungstilgers zur Reduzierung von Schwingungen im Wesentlichen unabhängig von der Temperatur des Tilgers, insbesondere in Windkraftanlagen.

### Kurze Beschreibung der Abbildungen:

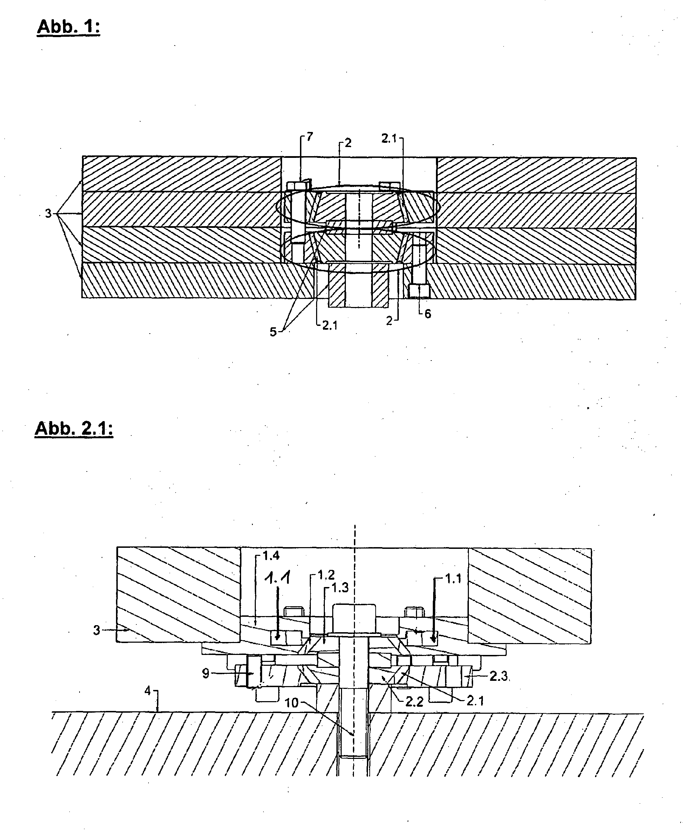

Abb. 1: zeigt einen aus der EP 1 286 076 A1 bekannten elastomeren Tilger des Standes der Technik.
Abb. 2.1: zeigt einen erfindungsgemäßen Schwingungstilger mit zwei gegeneinander verspannten Dämpfungselementen (1) und (2) und einem zusätzlichen Elastomervolumen, welches radial zur Verspannungsrichtung im oberen Dämpfungs-Funktionsteil angeordnet ist.
Abb. 2.2: zeigt den erfindungsgemäßen Tilger der Abb. 2.1, welcher jedoch zusätzlich Feinjustierungsmittel (8) aufweist um die Vorspannung im zusätzlichen Elastomervolumen fein einzustellen und anzupassen.
Abb. 3: zeigt einen gemäß Abb. 2.1 konstruierten Tilger, welcher zusätzlich im zweiten, unteren Funktionsteil eine weiteres zusätzliche Elastomervolumen aufweist.
Abb. 4: zeigt einen erfindungsgemäßen Tilger, bei dem das zusätzliche Elastomervolumen außerhalb der Funktionselemente (1) (2) und sogar außerhalb des Schwingungstilgers angeordnet ist.
Abb. 5: zeigt den erfindungsgemäßen Tilger gemäß Abb. 2.1. Das zusätzliche Elastomervolumen (1.1) ist selbst zusätzlich komprimierbar oder dekomprimierbar durch einen einstellbaren Druckring, der sich in dem Elastomermaterial des zusätzlichen Eiastomervolumens befindet, oder oberhalb oder unterhalb desselbigen angeordnet ist. Der Druckring ist selbst ein Elastomer, welches in seinem Inneren Kanäle aufweist, die mit Druck beaufschlagt werden können, und das umliegende Elastomermaterial komprimieren oder dekömprimieren.
Abb. 6: zeigt ein schematisiertes Dämpfungselement mit einem zusätzlichen Elastomervolumen in Form eines ringähnlichen Gebildes, welches das konische Funktionsteil umläuft, wobei das zusätzliche Elastomervoulmen, das mit der konischen Elastomerschicht des Funktionsteil in direkter Verbindung steht, mittels eines Metallbolzens, der über eine Magnetspule bewegbar ist, komprimiert oder dekomprimiert werden kann.
Abb.7: zeigt eine spezielle Ausführungsform eines erfindungsgemäßen Dämpfungselementes, wobei hier das zusätzliche Elastomervolumen (1.5) einen Teil der Elastomerschicht (1.2) darstellt, und dadurch ebenfalls an der am Funktionsteil auftretenden Schubverformung teilnimmt.
Abb. 8: zeigt eine elastomere Buchse für eine Achse (26), bei welcher das Elastomervolumen (28) in Verbindung stehet mit einem zusätzlichen Elastomervolumen (23) außerhalb der Elastomerbuchse im Gehäuse (22).
Abb. 9: zeigt einen erfindungsgemäßen Temperatur kompensierbaren Tilger, welcher Scheiben (29) aufweist, die ganz oder teilweise Fasen (30) besitzen, an die sich verdrängtes Elastomermaterial aus (1.2), (2.1) und / oder (1.1) anlegen kann, bzw. den durch die Fasen gebildeten Raum ausfüllen kann.

### Kurze Beschreibung der verwendeten Bezugsgrößen:

1. Funktionsteil 1
   1.1 zusätzliches Elastomervolumen
   1.2 Gummischicht / Silikonschicht /Polyurethanschicht
   1.3 Kern
   1.4 Außenteil mit Elastomer-Reservat
2. Funktionsteil 2
   2.1 Gummischicht / Silikonschicht /Polyurethanschicht
   2.2 Kern
   2.3 Außenteil
3. Tilgermasse
4. zu tilgendes Bauteil
5. Adapterstück
6. Befestigungsschraube Tilgermasse
7. Einstellschraube
8. Einstellschraube Feinjustage
9. Abdrückschraube
10. Befestigungsschraube Tilger
11. separater Druckbehälter
12. Zuleitung
13. zusätzliches Elastomervolumen (außerhalb Funktionsteil) alternativ: Flüssigkeit oder Gas als Füllmedium
14. Druckring
15. Absperrventil
16. Zuleitung
17. Manometer
18. Feder
19. elektrische Magnetspule
20. Stromanschluss Magnetspule
21. Metallbolzen
22. Gehäuse
23. zusätzliches Elastomervolumen in Gehäuse
24. Innenblech Buchse
25. Außenblech Buchse
26. Achse
27. Verbindungslöcher in Außenblech
28. Elastomerschicht Buchse
29. Scheibe mit Fase

## Patentansprüche

1. Temperatur kompensierbares Dämpfungselement (1) geeignet zur temperaturunabhängigen Reduzierung von Schwingungen im Wesentlichen umfassend ein festes, nicht elastisches Außenteil (1.4) und ein festes, nicht elastisches Innenteil (1.3), welches ganz oder teilweise passend in eine entsprechend geformte Aussparung oder Öffnung des Außenteils eingefügt ist, wobei Außen- und Innenteil Berührungsflächen aufweisen, welche durch eine aus einem Elastomermaterial bestehende elastische Schicht (1.2) mit einander verbunden sind, die durch Spannmittel in Bezug auf eine gewünschte Frequenz vorgespannt oder vorspannbar ist, **dadurch gekennzeichnet, dass** die für die Schwingungsdämpfung verantwortliche elastische Schicht (1.2) mit einem zusätzlichen elastischen Volumen (1.1) direkt an einer oder mehreren Stellen in Verbindung steht, wobei das zusätzliche elastische Volumen (1.1) das 5- bis 100- fache des Volumens der elastischen Schicht (1.2) beträgt, und bewirkt, dass bei Temperaturänderung in einem Temperaturbereich zwischen - 20°C und +50°C die Erregerfrequenz des Dämpfungselementes sich um maximal 10 bis 20% ändert.

2. Dämpfungselement nach Anspruch 1, **dadurch gekennzeichnet, dass** das elastische Volumen (1.1) das 5- bis 25- fache oder das 10 bis 20-fache des Volumens der elastischen Schicht (1.2) beträgt.

3. Dämpfungselement nach Anspruch (1) oder (2), **dadurch gekennzeichnet, dass** die Berührungsflächen des Außen- und Innenteils konisch-plan, zylindrisch-plan, sphärisch oder konvex bzw. konkav sind, und die elastische Schicht (1.2) entsprechend geformt ist.

4. Dämpfungselement nach einem der Ansprüche 1 bis 3, **dadurch gekennzeichnet, dass** das zusätzliche elastische Volumen (1.1) im Außenteil (1.4) untergebracht ist.

5. Dämpfungselement nach einem der Ansprüche 1 bis 3, **dadurch gekennzeichnet, dass** das zusätzliche elastische Volumen (1.1) im Innenteil (1.3) untergebracht ist.

6. Dämpfungselement nach einem der Ansprüche 1 bis 3, **dadurch gekennzeichnet, dass** das zusätzliche elastische Volumen (1.1) (13) außerhalb des Dämpfungselements (1) untergebracht ist und durch Verbindungen (12) mit der Elastomerschicht (1.2) verbunden ist.

7. Dämpfungselement nach einem der Ansprüche 1 bis 3, **dadurch gekennzeichnet, dass** das zusätzliche elastische Volumen (1.1) ein Teil des Volumens der elastischen Schicht (1.2) ist und gebildet wird durch Aussparungen oder Kavitäten in den Berührungsflächen des Außen- und Innenteils (1.1)(1.3) des Dämpfungselementes.

8. Dämpfungselement nach einem der Ansprüche 1 bis 7, **dadurch gekennzeichnet, dass** das elastische Volumen (1.1) (13) ein Elastomermaterial, ein Gas, eine Flüssigkeit, oder ein viskoses Material ist.

9. Dämpfungselement nach Anspruch 8, **dadurch gekennzeichnet, dass** das zusätzliche elastische Volumen einen temperaturabhängigen Ausdehnungskoeffizienten besitzt, der größer ist als der Ausdehnungskoeffizient der elastomeren Schicht (1.2).

10. Dämpfungselement nach einem der Ansprüche 1 bis 9, **dadurch gekennzeichnet, dass** zusätzliche elastische Volumen (1.1) durch Druckmittel zusätzlich komprimiert oder dekomprimiert werden kann.

11. Dämpfungselement nach Anspruch 10, **dadurch gekennzeichnet, dass** das Druckmittel eine oder mehrere Spannschrauben (8) umfasst.

12. Dämpfungselement nach Anspruch 10, **dadurch gekennzeichnet, dass** das Druckmittel einen durch eine elektrische Magnetspule betriebenen Metallbolzen umfasst (18 bis 21).

13. Temperaturunabhängiger Schwingungstilger umfassend eine Tilgermasse (1) und mindestens ein Dämpfungselement gemäß der Ansprüche 1 bis 12.

14. Temperaturunabhängiger Schwingungstilger nach Anspruch 13, **dadurch gekennzeichnet, dass** er zwei Dämpfungselemente (1) und (2) gemäß der Ansprüche 1 bis 12 aufweist, wobei beide Dämpfungselemente gegeneinander durch Spannmittel .(7) verspannt oder verspannbar sind.

15. Temperaturunabhängiger Schwingungstilger nach Anspruch 14, **dadurch gekennzeichnet, dass** das zweite Dämpfungselement kein zusätzliches elastisches Volumen (1.1) im Außen- und / oder Innenteil (2.3) (2.2) aufweist.

16. Temperaturunabhängiger Schwingungstilger nach einem der Ansprüche 13 bis 15, **dadurch gekennzeichnet, dass** die Dämpfungselemente (1) (2) jeweils einen konischen planen oder sphärischen Außen- und Innenteil (1.4) (1.3) (2.2) (2.3) aufweisen.

17. Temperaturunabhängiger Schwingungstilger nach einem der Ansprüche 13 bis 16, **dadurch gekennzeichnet, dass** das zusätzliches Volumen (1.1) (13) der Dämpfungselemente (1) und (2) zusammen 10 bis 20 mal größer ist als das Volumen der Elastomerschichten (1.2) und (2.1) zusammen.

18. Verwendung eines Dämpfungselementes gemäß der Ansprüche 1 bis 12 oder eines Schwingungstilgers gemäß der Ansprüche 13 bis 17 zur Reduzierung von Schwingungen in unterschiedlichen Temperaturen ausgesetzten Anlagen, insbesondere Windkraftanlagen.

19. Windkraftanlage, **dadurch gekennzeichnet, dass** sie ein Dämpfungselement gemäß der Ansprüche 1 bis 12 oder einen Schwingungstilger gemäß der Ansprüche 13 bis 17 aufweist.

## Claims

1. Temperature-compensatable damping element (1) which is suitable for the temperature-independent reduction of vibrations, essentially consisting of a fixed, non-elastic outer part (1.4) and a fixed, non-elastic inner part (1.3), which is inserted fully or partly with a good fit into a correspondingly shaped cut-out or opening of the outer part, where outer and inner parts have contact surfaces which are connected to one another by an elastic layer (1.2) which consists of an elastomer material and which is or can be pretensioned with respect to a desired frequency by tensioning means, **characterised in that** the elastic layer (1.2) responsible for the vibration damping is connected directly at one or more points to an additional elastic volume (1.1), where the additional elastic volume (1.1) is 5 to 100 times the volume of the elastic layer (1.2), and has the effect that the excitation frequency of the damping element changes by a maximum of 10 to 20% in the case of a temperature change in a temperature range between -20°C and +50°C.

2. Damping element according to Claim 1, **characterised in that** the elastic volume (1.1) is 5 to 25 times or 10 to 20 times the volume of the elastic layer (1.2).

3. Damping element according to Claim (1) or (2), **characterised in that** the contact surfaces of the outer and inner parts are conical-planar, cylindrical-planar, spherical or convex or concave, and the elastic layer (1.2) has a corresponding shape.

4. Damping element according to one of Claims 1 to 3, **characterised in that** the additional elastic volume (1.1) is accommodated in the outer part (1.4).

5. Damping element according to one of Claims 1 to 3, **characterised in that** the additional elastic volume (1.1) is accommodated in the inner part (1.3).

6. Damping element according to one of Claims 1 to 3, **characterised in that** the additional elastic volume (1.1) (13) is accommodated outside the damping element (1) and is connected to the elastomer layer (1.2) by connections (12).

7. Damping element according to one of Claims 1 to 3, **characterised in that** the additional elastic volume (1.1) is part of the volume of the elastic layer (1.2) and is formed by cutouts or cavities in the contact surfaces of the outer and inner parts (1.1) (1.3) of the damping element.

8. Damping element according to one of Claims 1 to 7, **characterised in that** the elastic volume (1.1) (13) is an elastomer material, a gas, a liquid, or a viscous material.

9. Damping element according to Claim 8, **characterised in that** the additional elastic volume has a temperature-dependent coefficient of expansion which is greater than the coefficient of expansion of the elastomeric layer (1.2).

10. Damping element according to one of Claims 1 to 9, **characterised in that** the additional elastic volume (1.1) can additionally be compressed or decompressed by pressure means.

11. Damping element according to Claim 10, **characterised in that** the pressure means comprise one or more tensioning screws (8).

12. Damping element according to Claim 10, **characterised in that** the pressure means comprise a metal bolt (18 to 21) operated by an electrical magnet coil.

13. Temperature-independent vibration damper comprising a damper mass (1) and at least one damping element according to Claims 1 to 12.

14. Temperature-independent vibration damper according to Claim 13, **characterised in that** it has two damping elements (1) and (2) according to Claims 1 to 12, where the two damping elements are or can be tensioned against one another by tensioning means (7).

15. Temperature-independent vibration damper according to Claim 14, **characterised in that** the second damping element has no additional elastic volume (1.1) in the outer and/or inner parts (2.3) (2.2).

16. Temperature-independent vibration damper according to one of Claims 13 to 15, **characterised in that** the damping elements (1) (2) each have a conical planar or spherical outer and inner part (1.4) (1.3) (2.2) (2.3).

17. Temperature-independent vibration damper according to one of Claims 13 to 16, **characterised in that** the additional volume (1.1) (13) of the damping elements (1) and (2) together is 10 to 20 times larger than the volume of the elastomer layers (1.2) and (2.1) together.

18. Use of a damping element according to Claims 1 to 12 or a vibration damper according to Claims 13 to 17 for the reduction of vibrations in structures subjected to different temperatures, in particular wind turbines.

19. Wind turbine, **characterised in that** it has a damping element according to Claims 1 to 12 or a vibration damper according to Claims 13 to 17.

## Revendications

1. Elément d'amortissement compensable en température (1), lequel convient pour une réduction de vibrations indépendante de la température, est essentiellement constitué par une partie externe non élastique fixe (1.4) et par une partie interne non élastique fixe (1.3), laquelle est insérée complètement ou partiellement selon un ajustement de bonne qualité à l'intérieur d'une découpe ou ouverture conformée en correspondance de la partie externe, où les parties externe et interne comportent des surfaces de contact qui sont connectées l'une à l'autre par une couche élastique (1.2) qui est constituée en un matériau d'élastomère et qui est ou peut être mise en pré-tension selon une fréquence souhaitée par un moyen de tension, **caractérisé en ce que** la couche élastique (1.2) qui assure l'amortissement des vibrations est connectée directement en un ou plusieurs point(s) à un volume élastique additionnel (1.1), dans lequel le volume élastique additionnel (1.1) vaut de 5 à 100 fois le volume de la couche élastique (1.2), et a pour effet que la fréquence d'excitation de l'élément d'amortissement varie au maximum de 10 à 20% dans le cas d'une variation de température dans une plage de températures entre -20°C et +50°C.

2. Elément d'amortissement selon la revendication 1, **caractérisé en ce que** le volume élastique (1.1) vaut 5 à 25 fois ou 10 à 20 fois le volume de la couche élastique (1.2).

3. Elément d'amortissement selon la revendication (1) ou (2), **caractérisé en ce que** les surfaces de contact des parties externe et interne sont plans coniques, plans cylindriques, sphériques ou convexes ou concaves, et la couche élastique (1.2) présente une forme en correspondance.

4. Elément d'amortissement selon l'une des revendications 1 à 3, **caractérisé en ce que** le volume élastique additionnel (1.1) est logé dans la partie externe (1.4).

5. Elément d'amortissement selon l'une des revendications 1 à 3, **caractérisé en ce que** le volume élastique additionnel (1.1) est logé dans la partie interne (1.3).

6. Elément d'amortissement selon l'une des revendications 1 à 3, **caractérisé en ce que** le volume élastique additionnel (1.1) (13) est logé à l'extérieur de l'élément d'amortissement (1) et est connecté à la couche en élastomère (1.2) par des connexions (12).

7. Elément d'amortissement selon l'une des revendications 1 à 3, **caractérisé en ce que** le volume élastique additionnel (1.1) est une partie du volume de la couche élastique (1.2) et est formé par des découpes ou des cavités ménagées dans les surfaces de contact des parties externe et interne (1.1) (1.3) de l'élément d'amortissement.

8. Elément d'amortissement selon l'une des revendications 1 à 7, **caractérisé en ce que** le volume élastique (1.1) (13) est un matériau d'élastomère, un gaz, un liquide ou un matériau visqueux.

9. Elément d'amortissement selon la revendication 8, **caractérisé en ce que** le volume élastique additionnel présente un coefficient de dilatation dépendant de la température qui est supérieur au coefficient de dilatation de la couche en élastomère (1.2).

10. Elément d'amortissement selon l'une des revendications 1 à 9, **caractérisé en ce que** le volume élastique additionnel (1.1) peut de façon additionnelle être comprimé ou décomprimé à l'aide d'un moyen de pression.

11. Elément d'amortissement selon la revendication 10, **caractérisé en ce que** le moyen de pression comprend une ou plusieurs vis de tension (8).

12. Elément d'amortissement selon la revendication 10, **caractérisé en ce que** le moyen de pression comprend un boulon en métal (18 à 21) actionné au moyen d'une bobine d'aimant électrique.

13. Amortisseur de vibration indépendant de la température comprenant une masse d'amortisseur (1) et au moins un élément d'amortissement selon les revendications 1 à 12.

14. Amortisseur de vibration indépendant de la température selon la revendication 13, **caractérisé en ce qu'**il comporte deux éléments d'amortissement (1) et (2) selon les revendications 1 à 12, dans lequel les deux éléments d'amortissement sont ou peuvent être mis en tension l'un contre l'autre à l'aide d'un moyen de tension (7).

15. Amortisseur de vibration indépendant de la température selon la revendication 14, **caractérisé en ce que** le second élément d'amortissement ne comporte pas de volume élastique additionnel (1.1) dans les parties externe et/ou interne (2.3) (2.2).

16. Amortisseur de vibration indépendant de la température selon l'une des revendications 13 à 15, **caractérisé en ce que** les éléments d'amortissement (1) (2) comportent chacun des parties externe et interne plans coniques ou sphériques (1.4) (1.3) (2.2) (2.3).

17. Amortisseur de vibration indépendant de la température selon l'une des revendications 13 à 16, **caractérisé en ce que** le volume additionnel (1.1) (13) des éléments d'amortissement (1) et (2) considérés ensemble est 10 à 20 fois plus grand que le volume des couches en élastomère (1.2) et (2.1) considérées ensemble.

18. Utilisation d'un élément d'amortissement selon les revendications 1 à 12 ou d'un amortisseur de vibration selon les revendications 13 à 17 pour la réduction de vibrations dans des structures soumises à différentes températures, en particulier des éoliennes.

19. Eolienne, **caractérisée en ce qu'**elle comporte un élément d'amortissement selon les revendications 1 à 12 ou un amortisseur de vibration selon les revendications 13 à 17.
